# FASCICULE DE BREVET EUROPEEN

(11) **EP 3 583 618 B1**
(45) Date de publication et mention de la délivrance du brevet: **02.12.2020**
(21) Numéro de dépôt: 18704262.7
(22) Date de dépôt: 16.02.2018
(51) Int. Cl.: H01H 71/12, H02H 3/02

(54) **DISJONCTEUR**
SCHUTZSCHALTER
CIRCUIT BREAKER

(30) Priorité: 16.02.2017 FR 1751256
(43) Date de publication de la demande: 25.12.2019
(73) Titulaire: HAGER-ELECTRO SAS, 67210 Obernai (FR)
(72) Inventeur: GACEUS, Vincent, 67210 Obernai (FR)
(74) Mandataire: Cabinet Nuss
(86) Numéro de dépôt international: PCT/EP2018/053943
(87) Numéro de publication internationale: WO 2018/149998

(56) Documents cités:
- FR-A1- 2 592 737
- US-A1- 2005 001 489
- US-A1- 2016 181 782

## Description

La présente invention concerne un disjoncteur comprenant un capteur de courant agencé pour mesurer un courant électrique circulant dans une ligne d'alimentation en courant électrique d'une installation électrique et fournir une valeur de mesure du courant mesuré, lequel capteur est relié à un convertisseur analogique/numérique agencé pour convertir ladite valeur de mesure en une valeur numérique de mesure de courant, lequel convertisseur est relié à un organe de surveillance dudit courant ayant une entrée pour recevoir des données relatives au courant circulant dans l'installation électrique, lequel organe de surveillance est agencé pour détecter d'une part si la valeur numérique de mesure de courant est située dans une plage qui s'étend entre une première valeur-seuil et une deuxième valeur-seuil de courant électrique et d'autre part si la valeur numérique de mesure de courant est supérieure à cette deuxième valeur-seuil, la deuxième valeur-seuil étant supérieure à la première valeur-seuil, lequel organe de surveillance est également agencé pour produire un premier signal de commande lorsqu'il constate que la valeur numérique de mesure de courant est situé dans ladite plage et un deuxième signal de commande lorsqu'il constate que la valeur numérique de mesure de courant est supérieure à la deuxième valeur-seuil, lequel organe de surveillance est agencé pour se brancher sur une alimentation en énergie à partir d'une source de réserve d'énergie électrique.

Un tel disjoncteur est généralement connu. Ce disjoncteur fait office d'un outil de sécurité dans le réseau électrique d'un immeuble. Ce disjoncteur peut être actionné de façon manuelle, par exemple pour couper le courant électrique lorsqu'il faut exécuter des travaux sur le réseau de maintenance sur l'installation électrique en aval du dit disjoncteur. Le disjoncteur peut également être activé mécaniquement et automatiquement en cas de surintensité de courant, de court-circuit, ou de courant de fuite sur le réseau. En fonctionnement le disjoncteur va mesurer le courant électrique circulant dans la ligne d'alimentation en courant électrique de l'installation électrique et fournir une valeur de mesure du courant mesuré. Cette valeur est convertie par le convertisseur analogique/numérique en une valeur numérique de mesure de courant qui pourra ensuite être traitée de façon numérique par l'organe de surveillance. Ce dernier vérifie si d'une part la valeur numérique de mesure de courant est située dans une plage qui s'étend entre une première valeur-seuil et une deuxième valeur-seuil de courant électrique et d'autre part si la valeur numérique de mesure de courant est supérieure à cette deuxième valeur-seuil. Cette plage sera choisie en fonction du courant nominal pour lequel le disjoncteur a été conçu, également appelée le calibre du disjoncteur. L'organe de surveillance va produire un premier signal de commande lorsqu'il constate que la valeur numérique de mesure de courant est située dans ladite plage et un deuxième signal de commande lorsqu'il constate que la valeur numérique de mesure de courant est supérieure à la deuxième valeur-seuil. Sous contrôle du deuxième signal de commande l'organe de surveillance va réaliser une coupure effective du courant sur la ligne.

Les disjoncteurs connus sont conçus pour à la fois réaliser une protection thermique traditionnelle, par exemple à l'aide d'un bilame, et une souplesse dans la coordination au sein de l'installation électrique, qui sont des fonctions primaires. Les événements les plus redoutés sont le non-déclenchement en cas de surcharge ou de court-circuit et le déclenchement intempestif. En plus des fonctions primaires, qui concernent la sécurité et le fonctionnement de l'installation, les disjoncteurs réalisent des fonctions secondaires, qui ne concernent pas directement la sécurité électrique et le fonctionnement de l'installation, comme des mesures ou des affichages d'informations, qui sont des fonctions secondaires.

Un désavantage du disjoncteur connu est que la modularité pour les fonctions primaires et secondaires est limitée de par leur architecture.

Le document FR 2 592 737 A1 divulgue un disjoncteur comportant une unité principale et une unité auxiliaire pour lequel il est prévu de séparer les fonctions de lecteur et de déclencheur ainsi-que d'organiser le déclencheur et un lecteur indépendant pour qu'ils soient associables de façon simple et rapide.

L'invention a pour but de réaliser un disjoncteur qui puisse répondre à la fois aux exigences de sureté de fonctionnement requis par les fonctions primaires et à la modularité requise par les fonctions secondaires.

A cette fin l'invention concerne un disjoncteur selon la revendication 1. L'organe de surveillance comporte une unité principale et une unité auxiliaire, ladite unité principale étant agencée pour exécuter sur base desdites données reçues des fonctions primaires de protection de l'installation électrique et produire le premier et deuxième signal de commande, ladite unité principale étant agencée pour réaliser sous contrôle du deuxième signal de commande une coupure du courant circulant dans l'installation, ladite unité auxiliaire étant agencée pour être activée sous contrôle du premier signal de commande et pour exécuter sur base desdites données reçues des fonctions secondaires de l'installation électrique, et en ce que lorsque l'unité auxiliaire est activée par le premier signal de commande, l'unité auxiliaire est agencée pour exécuter les fonctions secondaires et l'unité principale est agencée pour exécuter les fonctions principales. La présence d'une unité principale et d'une unité auxiliaire permet de répartir les tâches à accomplir par l'organe de surveillance. Puisque l'unité auxiliaire est activée par le premier signal de commande elle permet d'exécuter les fonctions secondaires et ainsi de décharger l'unité principale de ces fonctions-là lorsque l'on se trouve sous le premier signal de commande. Ainsi l'unité principale peut se charger des exigences de sureté de fonctionnement et l'unité auxiliaire se charge des fonctions secondaires, qui ne sont pas liées à la sureté électrique de l'installation. Il en résulte également qu'à partir du moment où l'unité auxiliaire est activée par le premier signal de commande, seule l'unité principale exécute les fonctions primaires, et que l'unité auxiliaire est activée en vue d'exécuter les fonctions secondaires, déchargeant ainsi l'unité principale de l'exécution de l'ensemble des fonctions secondaires.

Une première forme de réalisation préférentielle d'un disjoncteur suivant l'invention est caractérisée en ce que ladite unité auxiliaire étant reliée à une porte d'accès ayant une entrée de commande relié à l'unité principale pour recevoir le premier signal de commande, la porte d'accès étant agencée pour s'ouvrir sous contrôle du premier signal de commande. L'usage d'une porte d'accès pilotée de type porte électronique de gestion des données par le premier signal permet une solution fiable pour activer l'unité auxiliaire.

Une deuxième forme de réalisation préférentielle d'un disjoncteur suivant l'invention est caractérisée en ce que l'organe de surveillance est reliée à une source d'alimentation en énergie électrique elle-même alimentée à partir du courant électrique circulant dans la ligne d'alimentation, l'unité auxiliaire étant reliée à cette source d'alimentation par l'intermédiaire d'un interrupteur commandé par le premier signal de commande de telle façon à l'alimenter en énergie électrique sous contrôle du premier signal de commande. Ceci permet d'alimenter l'unité auxiliaire en énergie sous contrôle de l'unité principale.

L'invention sera maintenant décrite plus en détails à l'aide des dessins qui illustrent un exemple de réalisation d'un disjoncteur suivant l'invention. Dans les dessins :
La figure 1 illustre un exemple de valeurs de courant circulant dans la ligne d'alimentation en courant ;
La figure 2 illustre le choix des valeurs seuil en fonction du calibre du disjoncteur ; et
La figure 3 montre un disjoncteur suivant l'invention qui est traversé par une ligne d'alimentation en courant.

Dans les figures une même référence a été attribuée à un même élément ou à un élément analogue.

Le courant électrique qui circule sur la ligne varie bien entendu en fonction de la quantité d'énergie électrique requise par l'installation. Le rôle principale d'un disjoncteur est de surveiller que le courant électrique n'excède pas certaines valeurs prédéterminées de courant électrique qui pourraient mener à une surchauffe de la ligne et donc provoquer un incendie. D'autre part le disjoncteur veille aussi à constater la présence d'éventuels courts-circuits sur la ligne. Lorsque le disjoncteur constate une telle anomalie sur la ligne, comme un court-circuit, il va réaliser la coupure du courant sur la ligne afin de sécuriser l'installation.

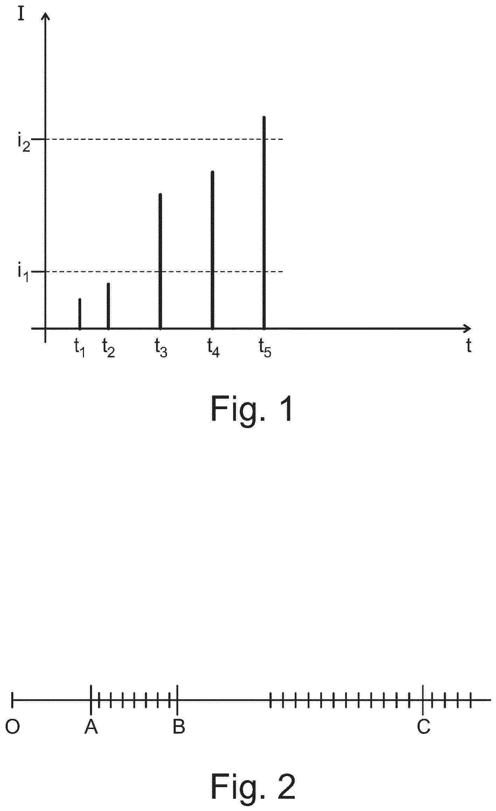

La figure 1 illustre une plage de courant située entre la valeur i₁ et i₂, où i₁ est par exemple égal à 15A et i₂ égal à 40A. Au temps t1 et t2 la valeur mesurée du courant présent sur une ligne d'alimentation en courant est inférieure à i₁ et donc il n'y a pas d'anomalie présente sur la ligne. Au temps t3 et t4 la valeur mesurée du courant présent sur la ligne est supérieure à i₁ mais inférieure à i₂. Au temps t5 la valeur mesurée du courant présent sur la ligne est supérieure à i_{2.} La plage située entre i₁ et i₂ est une plage qui peut être considérée comme étant indicative que le courant est plus élevé que la valeur nominale choisie, mais pas alarmante, alors qu'un courant supérieur à i₂ indique une situation alarmante.

La figure 2 illustre le choix des valeurs seuil en fonction du calibre du disjoncteur. Elle montre une frise ampérométrique sur laquelle une section A-B est illustrée et dans laquelle un premier seuil d'une valeur de courant peut être choisie. Elle montre également une valeur C, qui représente le calibre d'un disjoncteur. Le calibre même étant fixé par exemple en respectant la norme IEC60255-151 de 2009. Le calibre étant la valeur de courant sur laquelle le disjoncteur est calibré pour couper l'alimentation en courant électrique. La section A-B est par exemple choisie à une valeur de courant située entre 10 et 30% de la valeur du calibre du disjoncteur. C'est dans cette section A-B que sera choisie la première valeur-seuil i₁. La valeur du calibre sera de préférence choisie comme la deuxième valeur-seuil de courant électrique i₂, la deuxième valeur-seuil étant bien entendu supérieure à la première valeur-seuil.

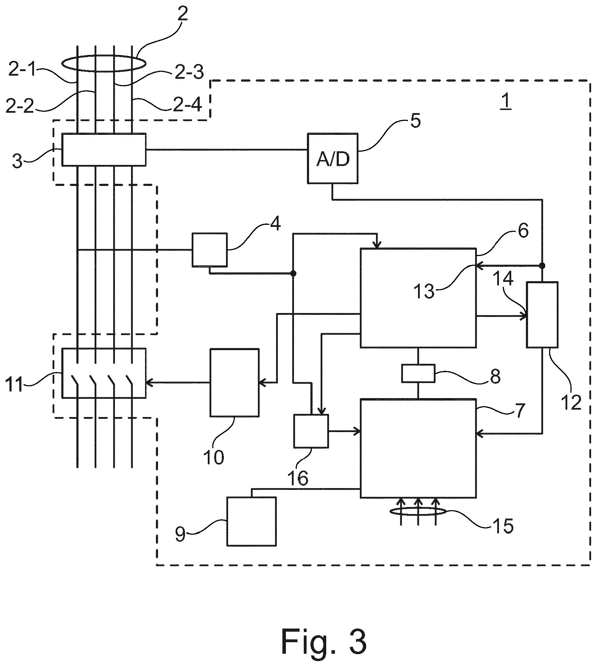

Le disjoncteur 1 illustré à la figure 3 est traversé par la ligne d'alimentation en courant 2 servant par exemple à alimenter en courant électrique un immeuble. Dans l'exemple illustré, la ligne d'alimentation en courant électrique comporte trois phases 2-1, 2-2 et 2-3 ainsi qu'un neutre 2-4. Toutefois il sera clair que l'invention n'est pas limitée à des disjoncteurs utilisés sur des lignes d'alimentation ayant trois phases et un neutre et que l'invention s'applique également à des disjoncteurs utilisés sur des lignes ayant plus ou ayant moins de trois phases.

Le disjoncteur comporte un capteur 3 de courant placé sur la ligne d'alimentation 2 et agencé pour mesurer un courant électrique circulant dans la ligne d'alimentation en courant électrique. Le capteur est également agencé pour fournir une valeur de mesure du courant mesuré. Le capteur est de préférence agencé pour mesurer le courant qui circule dans chaque ligne d'alimentation pour ainsi permettre de vérifier si le courant dans une phase n'est pas plus intense que dans les autres et pouvoir ainsi discriminer des défauts électriques. Afin de surveiller la variation dans le temps du courant qui circule dans la ligne, le courant est mesuré soit en continu soit par échantillonnage.

Le capteur 3 est relié à un convertisseur 5 analogique/ numérique agencé pour convertir la valeur de mesure mesurée par le capteur en une valeur numérique de mesure de courant. Le convertisseur est relié à un organe de surveillance 6,7 du courant. L'organe de surveillance est relié à la source 4 de réserve d'énergie électrique et peut ainsi être alimenté par cette source. Cet organe de surveillance de courant comporte une unité principale 6 et une unité auxiliaire 7. L'unité principale est agencée pour exécuter sur base desdits données reçues via le convertisseur 5 des fonctions primaires de protection de l'installation électrique, comme la surveillance de l'intensité du courant qui circule sur la ligne, la constatation d'une surtension ou de la présence d'un court-circuit sur la ligne. L'unité auxiliaire est agencée pour exécuter entre autres sur base des données reçues des fonctions secondaires de l'installation électrique qui ne sont pas liées à la sureté de l'installation, comme la mesure de grandeurs électrique, par exemple l'intensité du courant et/ou de la tension électrique, la fréquence du courant, sa puissance, le rapportage d'erreurs ou de situation d'alarme, la production de données à remettre à un bus de communication, la production de messages de maintenance préventive, etc....

La source 4 de réserve d'énergie électrique est de préférence maintenue chargée par le courant électrique présent sur la ligne 2. La source 4 de réserve sert à alimenter directement l'unité principale 6 et cela également en cas de panne de courant. De préférence l'unité auxiliaire 7 est reliée à la source d'alimentation 4 par l'intermédiaire d'un interrupteur 16 commandé par un premier signal de commande, comme il sera décrit ci-dessous, de telle façon à alimenter l'unité auxiliaire en énergie électrique sous contrôle du premier signal de commande.

L'unité principale 6 possède une entrée 13 reliée à la sortie du convertisseur 5 et par laquelle la valeur numérique de mesure de courant lui est fournie. L'unité principale 6 est agencée pour détecter d'une part si la valeur numérique de mesure de courant est située dans la plage qui s'étend entre la première valeur-seuil i₁ et la deuxième i₂ valeur-seuil de courant électrique et d'autre part si la valeur numérique de mesure de courant est supérieure à cette deuxième valeur-seuil.

L'unité principale de l'organe de surveillance est également agencée pour produire un premier signal de commande lorsqu'elle constate que la valeur numérique de mesure de courant est située dans ladite plage et un deuxième signal de commande lorsqu'elle constate que la valeur numérique de mesure de courant est supérieure à la deuxième valeur-seuil. Cette constatation est par exemple réalisée en calculant le pourcentage que représente la valeur numérique de mesure de courant par rapport à la valeur du calibre. De façon alternative la constatation peut être réalisée en comparant la valeur numérique mesurée avec des valeurs stockées dans une mémoire qui fait partie de l'unité principale. Le premier signal de commande est de préférence maintenu aussi longtemps que la valeur numérique de mesure de courant reste dans ladite plage et il sera annulé lorsque la valeur numérique de mesure de courant sera retombée sous la valeur i₁.

L'unité principale est agencée pour réaliser, sous contrôle du deuxième signal de commande, une coupure du courant circulant dans l'installation. L'unité principale est reliée à un déclencheur 10, lui-même relié à des contacts 11 de puissance montés en série sur les lignes de courant. Sous contrôle du deuxième signal de commande le déclencheur est activé pour ainsi faire basculer les contacts 11 de puissance et interrompre la circulation du courant sur la ligne 2.

L'unité auxiliaire est agencée pour être activée sous contrôle du premier signal de commande et pour exécuter entre autres sur base desdits données reçues des fonctions secondaires de l'installation électrique. Par fonctions secondaires on entend des fonctions ne concernant pas directement la sécurité de l'installation électrique comme le rapportage sur des incidents qui peuvent se produire sur le réseau, des informations sur la consommation de courant, des fonctions d'alarme, de maintenance ou de communication et la mesure de grandeurs électriques, par exemple l'intensité du courant et/ou de la tension électrique, la fréquence du courant, sa puissance.

L'unité auxiliaire est reliée à une porte d'accès 12 ayant une entrée de commande 14 relié à l'unité principale pour recevoir le premier signal de commande. La porte d'accès 12 est une porte unidirectionnelle dans le sens vers l'unité auxiliaire. Cette porte d'accès est agencée pour s'ouvrir sous contrôle du premier signal de commande. La porte d'accès est agencée pour gérer l'accès de données à l'unité auxiliaire sous contrôle du premier signal de commande. En effet l'unité auxiliaire n'est activée qu'après que le premier signal de commande ait été produit par l'unité principale, c'est-à-dire lorsque la valeur numérique du courant mesuré se situe dans la plage située entre i₁ et i₂. Si le courant a une valeur située dans cette dernière plage, cela signifie que le courant circulant sur la ligne a une valeur significative et qu'il faut donc que l'unité principale surveille l'évolution du courant. Pour décharger l'unité principale et lui permettre de traiter des fonctions principales, le premier signal de commande va ouvrir la porte d'accès 12 pour ainsi transmettre les données reçus via le convertisseur vers l'unité auxiliaire 7, ainsi qu'autoriser l'alimentation en énergie de l'unité secondaire par l'intermédiaire de l'interrupteur 16. Cette dernière va alors pouvoir prendre en charge les fonctions secondaires.

L'unité auxiliaire possède une ou plusieurs autres entrées 15 de données qui peuvent être reliés à par exemple un bus local et à un bus de terrain. L'unité auxiliaire peut également être reliée à une autre unité 9 comme par exemple une unité d'affichage via le bus local. Un échange de données entre l'unité principale et l'unité auxiliaire peut par exemple être réalisé à l'aide d'un bus de carte 8, par exemple du type UART ou SPI.

L'unité principale est de préférence agencée pour sauvegarder les données présentes dans cette unité principale sous contrôle du deuxième signal de contrôle et pour associer à ces données une donnée de temps indiquant le moment où le deuxième signal de contrôle a été produit. Ainsi lorsque le deuxième signal de commande a été produit indiquant un courant trop élevé sur la ligne l'unité principale va pouvoir sauvegarder des données essentielles qui permettront de mieux protéger l'installation après réarmement du disjoncteur. Le fait d'associer une donnée de temps permet non seulement de mémoriser le moment où la coupure du courant est intervenue, mais également lors de la reprise du courant de vérifier si les données stockées sont encore valides.

## Revendications

1. Disjoncteur (1) comprenant un capteur (3) de courant agencé pour mesurer un courant électrique circulant dans une ligne (2) d'alimentation en courant électrique d'une installation électrique et fournir une valeur de mesure du courant mesuré, lequel capteur est relié à un convertisseur analogique/numérique (5) agencé pour convertir ladite valeur de mesure en une valeur numérique de mesure de courant, lequel convertisseur est relié à un organe de surveillance (6,7) dudit courant ayant une entrée pour recevoir des données relatives au courant circulant dans l'installation électrique, lequel organe de surveillance est agencé pour détecter d'une part si la valeur numérique de mesure de courant est située dans une plage qui s'étend entre une première valeur-seuil et une deuxième valeur-seuil de courant électrique et d'autre part si la valeur numérique de mesure de courant est supérieure à cette deuxième valeur-seuil, la deuxième valeur-seuil étant supérieure à la première valeur-seuil, lequel organe de surveillance est également agencé pour produire un premier signal de commande lorsqu'il constate que la valeur numérique de mesure de courant est située dans ladite plage et un deuxième signal de commande lorsqu'il constate que la valeur numérique de mesure de courant est supérieure à la deuxième valeur-seuil, lequel organe de surveillance est agencé pour se brancher sur une alimentation en énergie à partir d'une source (4) de réserve d'énergie électrique, **caractérisé en ce que** l'organe de surveillance comporte une unité principale (6) et une unité auxiliaire (7), ladite unité principale étant agencée pour exécuter sur base desdites données reçues des fonctions primaires de protection de l'installation électrique et produire le premier et deuxième signal de commande, ladite unité principale étant agencée pour réaliser sous contrôle du deuxième signal de commande une coupure du courant circulant dans l'installation, ladite unité auxiliaire (7) étant agencée pour être activée sous contrôle du premier signal de commande et pour exécuter sur base desdites données reçues des fonctions secondaires de l'installation électrique, et **en ce que** lorsque l'unité auxiliaire (7) est activée par le premier signal de commande, l'unité auxiliaire (7) est agencée pour exécuter les fonctions secondaires et l'unité principale (6) est agencée pour exécuter les fonctions primaires de protection de l'installation électrique.

2. Disjoncteur suivant la revendication 1, **caractérisé en ce que** ladite unité auxiliaire (7) étant reliée à une porte d'accès (12) ayant une entrée de commande (14) relié à l'unité principale pour recevoir le premier signal de commande, la porte d'accès étant agencée pour s'ouvrir sous contrôle du premier signal de commande et **en ce que** ladite porte d'accès (12) est agencée pour gérer l'accès de données à l'unité auxiliaire (7) sous contrôle du premier signal de commande.

3. Disjoncteur suivant la revendication 2, **caractérisé en ce que** la porte d'accès est une porte unidirectionnelle dans le sens vers l'unité auxiliaire (7).

4. Disjoncteur suivant l'une des revendications 1 à 3, **caractérisé en ce que** l'organe de surveillance est reliée à une source d'alimentation en énergie électrique (4) elle-même alimentée à partir du courant électrique circulant dans la ligne d'alimentation, l'unité auxiliaire (7) étant reliée à cette source d'alimentation par l'intermédiaire d'un interrupteur(16) commandé par le premier signal de commande de telle façon à l'alimenter en énergie électrique sous contrôle du premier signal de commande.

5. Disjoncteur suivant l'une des revendications 1 à 4, **caractérisé en ce que** l'unité principale est agencée pour sauvegarder les données présentes dans cette unité principale sous contrôle du deuxième signal de contrôle et pour associer à ces données une donnée de temps indiquant le moment où le deuxième signal de contrôle a été produit.

6. Disjoncteur suivant l'une des revendications 1 à 5, **caractérisé en ce que** ladite source de réserve d'énergie électrique est reliée à l'unité principale.

## Patentansprüche

1. Schutzschalter (1) umfassend einen Stromsensor (3), der angeordnet ist, einen elektrischen Strom zu messen, der in einer Stromversorgungsleitung (2) einer elektrischen Anlage strömt, und einen Messwert des gemessenen Stroms bereitzustellen, wobei der Sensor mit einem Analog-Digital-Wandler (5) verbunden ist, der angeordnet ist, den Messwert in einen digitalen Strommesswert umzuwandeln, wobei der Wandler mit einem Element zur Überwachung (6, 7) des Stroms verbunden ist, das einen Eingang zum Empfang von Daten in Bezug auf den Strom, der in der elektrischen Anlage strömt, aufweist, wobei das Überwachungselement angeordnet ist, einerseits zu detektieren, ob der digitale Strommesswert in einem Bereich liegt, der sich zwischen einem ersten Schwellenwert und einem zweiten Schwellenwert elektrischen Stroms erstreckt, und andererseits, ob der digitale Strommesswert höher als dieser zweite Schwellenwert ist, wobei der zweite Schwellenwert höher als der erste Schwellenwert ist, wobei das Überwachungselement ebenfalls angeordnet ist, ein erstes Steuersignal zu erzeugen, wenn es feststellt, dass der digitale Strommesswert in dem Bereich liegt, und ein zweites Steuersignal zu erzeugen, wenn es feststellt, dass der digitale Strommesswert höher als der zweite Schwellenwert ist, wobei das Überwachungselement angeordnet ist, an eine Energieversorgung aus einer Reserve-Quelle (4) elektrischer Energie angeschlossen zu werden, **dadurch gekennzeichnet, dass** das Überwachungselement eine Haupteinheit (6) und eine Nebeneinheit (7) aufweist, wobei die Haupteinheit angeordnet ist, auf Grundlage der empfangenen Daten Hauptfunktionen zum Schutz der elektrischen Anlage auszuführen und das erste und zweite Steuersignal zu erzeugen, wobei die Haupteinheit angeordnet ist, unter Kontrolle des zweiten Steuersignals eine Abschaltung des Stroms, der in der Anlage strömt, durchzuführen, wobei die Nebeneinheit (7) angeordnet ist, unter Kontrolle des ersten Steuersignals aktiviert zu werden und auf Grundlage der empfangenen Daten Sekundärfunktionen der elektrischen Anlage auszuführen, und dadurch, dass, wenn die Nebeneinheit (7) vom ersten Steuersignal aktiviert wird, die Nebeneinheit (7) angeordnet ist, die Sekundärfunktionen auszuführen, und die Haupteinheit (6) angeordnet ist, die Primärfunktionen zum Schutz der elektrischen Anlage auszuführen.

2. Schutzschalter nach Anspruch 1, **dadurch gekennzeichnet, dass** die Nebeneinheit (7) mit einer Zugangstür (12) verbunden ist, die einen Steuereingang (14) aufweist, der mit der Haupteinheit verbunden ist, um das erste Steuersignal zu empfangen, wobei die Zugangstür angeordnet ist, sich unter Kontrolle des ersten Steuersignals zu öffnen, und dadurch, dass die Zugangstür (12) angeordnet ist, den Zugang von Daten auf die Nebeneinheit (7) unter Kontrolle des ersten Steuersignals zu verwalten.

3. Schutzschalter nach Anspruch 2, **dadurch gekennzeichnet, dass** die Zugangstür eine unidirektionale Tür in der Richtung zur Nebeneinheit (7) ist.

4. Schutzschalter nach einem der Ansprüche 1 bis 3, **dadurch gekennzeichnet, dass** das Überwachungselement mit einer Quelle zur Versorgung mit elektrischer Energie (4) verbunden ist, die selbst mit dem elektrischen Strom versorgt wird, der in der Versorgungsleitung strömt, wobei die Nebeneinheit (7) mittels eines Schalters (16) mit dieser Versorgungsquelle verbunden ist, der durch das erste Steuersignal so gesteuert wird, dass er die Nebeneinheit (7) unter Kontrolle des ersten Steuersignals mit elektrischer Energie versorgt.

5. Schutzschalter nach einem der Ansprüche 1 bis 4, **dadurch gekennzeichnet, dass** die Haupteinheit angeordnet ist, die Daten, die in dieser Haupteinheit vorhanden sind, unter Kontrolle des zweiten Steuersignals zu sichern und diesen Daten ein Zeitdatenelement zuzuordnen, das den Zeitpunkt angibt, zu dem das zweite Steuersignal erzeugt wurde.

6. Schutzschalter nach einem der Ansprüche 1 bis 5, **dadurch gekennzeichnet, dass** die Reserve-Quelle elektrischer Energie mit der Haupteinheit verbunden ist.

## Claims

1. Circuit breaker (1) comprising a current sensor (3) designed to measure an electric current flowing in an electric current supply line (2) of an electrical installation and provide a measurement value of the measured current, which sensor is connected to an analogue-to-digital converter (5) designed to convert said measurement value into a digital current measurement value, which converter is connected to a monitoring unit (6, 7) for monitoring said current having an input for receiving data relating to the current flowing in the electrical installation, which monitoring unit is designed to detect firstly whether the digital current measurement value is located within a range that extends between a first electric current threshold value and a second electric current threshold value and secondly whether the digital current measurement value is greater than this second threshold value, the second threshold value being greater than the first threshold value, which monitoring unit is also designed to produce a first control signal when it identifies that the digital current measurement value is located within said range and a second control signal when it identifies that the digital current measurement value is greater than the second threshold value, which monitoring unit is designed to connect to an energy supply from a reserve electrical energy source (4), **characterized in that** the monitoring unit comprises a main unit (6) and an auxiliary unit (7), said main unit being designed, on the basis of said received data, to execute primary functions for protecting the electrical installation and to produce the first and second control signal, said main unit being designed, under the control of the second control signal, to disconnect the current flowing in the installation, said auxiliary unit (7) being designed to be activated under the control of the first control signal and, on the basis of said received data, to execute secondary functions of the electrical installation, and **in that**, when the auxiliary unit (7) is activated by the first control signal, the auxiliary unit (7) is designed to execute the secondary functions and the main unit (6) is designed to execute the primary functions for protecting the electrical installation.

2. Circuit breaker according to Claim 1, **characterized in that** said auxiliary unit (7) is connected to an access door (12) having a control input (14) connected to the main unit in order to receive the first control signal, the access door being designed to open under the control of the first control signal, and **in that** said access door (12) is designed to manage data access to the auxiliary unit (7) under the control of the first control signal.

3. Circuit breaker according to Claim 2, **characterized in that** the access door is a unidirectional door in the direction towards the auxiliary unit (7).

4. Circuit breaker according to one of Claims 1 to 3, **characterized in that** the monitoring unit is connected to an electrical energy supply source (4) that is itself supplied from the electric current flowing in the supply line, the auxiliary unit (7) being connected to this supply source by way of a switch (16) controlled by the first control signal so as to supply it with electrical energy under the control of the first control signal.

5. Circuit breaker according to one of Claims 1 to 4, **characterized in that** the main unit is designed to save the data present in this main unit under the control of the second control signal and to associate, with these data, an item of time data indicating the time at which the second control signal was produced.

6. Circuit breaker according to one of Claims 1 to 5, **characterized in that** said reserve electrical energy source is connected to the main unit.
